# EUROPÄISCHE PATENTSCHRIFT

(11) **EP 3 258 902 B1**
(45) Veröffentlichungstag und Bekanntmachung des Hinweises auf die Patenterteilung: **22.08.2018**
(21) Anmeldenummer: 16706544.0
(22) Anmeldetag: 04.02.2016
(51) Int. Cl.: A61G 13/02

(54) **FERNBEDIENUNG ZUM STEUERN EINES MEDIZINISCHEN GERÄTES**
REMOTE CONTROL FOR CONTROLLING A MEDICAL APPLIANCE
COMMANDE À DISTANCE POUR COMMANDER UN APPAREIL MÉDICAL

(30) Priorität: 19.02.2015 DE 102015102351
(43) Veröffentlichungstag der Anmeldung: 27.12.2017
(73) Patentinhaber: Maquet GmbH, 76437 Rastatt (DE)
(72) Erfinder: GOLDE, Tim, 76227 Karlsruhe (DE); KRICKEBERG, Thomas, 76307 Karlsbad (DE); HELD, Fred, 22299 Hamburg (DE); HOPP, Roland, 20535 Hamburg (DE)
(74) Vertreter: Zacco GmbH
(86) Internationale Anmeldenummer: PCT/EP2016/052327
(87) Internationale Veröffentlichungsnummer: WO 2016/131659

(56) Entgegenhaltungen:
- FR-A1- 2 819 173
- US-A1- 2012 194 436

## Beschreibung

Die Erfindung betrifft eine Fernbedienungsvorrichtung zum Steuern mindestens eines medizinischen Gerätes, insbesondere eines Operationstisches, mit mehreren betätigbaren Gerätekomponenten. Ferner betrifft die Erfindung ein System mit einer Fernbedienungsvorrichtung und mindestens einem durch die Fernbedienungsvorrichtung steuerbaren medizinischen Gerät sowie ein Verfahren zum Steuern eines medizinischen Gerätes mittels einer Fernbedienungsvorrichtung.

Aus dem Stand der Technik ist es bekannt, medizinische Geräte wie etwa Operationstische mittels einer Fernbedienungsvorrichtung zu steuern, beispielsweise um Tischkomponenten wie verschiedene Tischsegmente oder eine Tischsäule nach Wunsch zu verstellen. Obgleich heutzutage Fernbedienungsvorrichtungen mit sogenannten virtuellen Bedientasten weit verbreitet sind, werden auf dem vorliegenden technischen Gebiet aus nachfolgend erläuterten Gründen häufig noch Fernbedienungsvorrichtungen bevorzugt, die keine virtuellen, sondern physische Bedientasten aufweisen, zum Beispiel wie in US 2012/0194436. Unter einer "virtuellen" Bedientaste ist beispielsweise ein Schaltfeld zu verstehen, das auf einem berührungssensitiven Bildschirm angeordnet ist und dessen Form, Größe, Erscheinung und Positionierung deshalb leicht änderbar sind. Demgegenüber wird im Folgenden unter einer "physischen" Bedientaste ein gegenständliches, körperhaftes Element verstanden, dessen Größe, Form, Erscheinung und Positionierung unveränderlich sind.

Eine Fernbedienungsvorrichtung mit virtuellen Bedientasten hat den Vorteil, besonders einfach an das gerade anzusprechende Tischmodell angepasst werden zu können. Eine solche Anpassung ist bei einer Fernbedienungsvorrichtung mit physischen Bedientasten naturgemäß nicht ohne weiteres möglich. Jedoch haben auch physische Bedientasten durchaus ihre Vorteile, die insbesondere auf ihrer haptischen Wahrnehmbarkeit beruhen. So kann der Benutzer physische Bedientasten ertasten und damit auf der Fernbedienungsvorrichtung lokalisieren. Auch erhält der Benutzer mit Betätigen einer physischen Bedientaste in der Regel gleichsam eine mechanische Rückmeldung, so dass er weiß, ob die Taste gedrückt worden ist oder nicht. Schließlich ist es bei einer Fernbedienungsvorrichtung mit physischen Bedientasten einfacher, Methoden zur Vermeidung gefährlicher Falscheingaben zu implementieren.

Betrachtet man eine Vielzahl unterschiedlicher Operationstische, die jeweils auch noch unterschiedlich konfiguriert werden können, so wird deutlich, dass es schwierig ist, für eine mit physischen Bedientasten versehene Fernbedienungsvorrichtung ein Tasten-Layout zu gestalten, mit dem alle möglichen Tischkonfigurationen ansprechbar sind und das dabei eine intuitive Bedienung gestattet. In der Vergangenheit wurden deshalb für unterschiedliche Operationstische auch unterschiedliche Fernbedienungsvorrichtungen entworfen, deren jeweiliges Tasten-Layout auf den speziellen Operationstisch, insbesondere dessen verstellbare Tischkomponenten ausgelegt ist. Verschiedene Konfigurationen ein- und desselben Operationstisches können bei einem solchen Tasten-Layout beispielsweise durch eine entsprechende Hintergrundbeleuchtung der Tasten angesprochen werden. So wird beispielsweise die Hintergrundbeleuchtung einer speziellen Taste deaktiviert, wenn diese Taste in der gerade anzusprechenden Konfiguration keine Funktion hat.

Ausgehend von diesem Stand der Technik liegt der Erfindung die Aufgabe zugrunde, eine mit physischen Bedientasten versehene Fernbedienungsvorrichtung so auszubilden, dass sich mit ihr eine Vielzahl unterschiedlicher medizinischer Geräte, insbesondere Operationstische intuitiv steuern lassen.

Die Erfindung löst diese Aufgabe durch die Fernbedienungsvorrichtung nach Anspruch 1.

Die erfindungsgemäße Fernbedienungsvorrichtung hat mehrere jeweils mindestens eine physische Bedientaste umfassende Tasteneinheiten zum Betätigen der Gerätekomponenten, wobei die Tasteneinheiten zur visuellen Unterscheidung voneinander jeweils mit einem individuellen, visuell erfassbaren Unterscheidungsmerkmal versehen sind; eine Anzeigeeinheit zum Darstellen von Piktogrammen, welche die durch die Tasteneinheiten betätigbaren Gerätekomponenten repräsentieren; eine Bereitstellungseinheit zum Erhalten einer Zuordnungsinformation, die eine eindeutige Zuordnung zwischen den Tasteneinheiten und den durch die Tasteneinheiten betätigbaren Gerätekomponenten definiert; und eine Steuereinheit zum Zuordnen der Tasteneinheiten zu den Gerätekomponenten entsprechend der empfangenen Zuordnungsinformation. Erfindungsgemäß steuert die Steuereinheit die Anzeigeeinheit derart, dass die von der Anzeigeeinheit dargestellten Piktogramme mit den visuell erfassbaren Unterscheidungsmerkmalen derjenigen Tasteneinheiten versehen sind, die den jeweiligen Gerätekomponenten anhand der Zuordnungsinformation zugeordnet sind.

Die nachfolgend beschriebene Erfindung ist darauf gerichtet, Operationstische mit verstellbaren Tischkomponenten fernbetätigt zu steuern. Jedoch ist die Erfindung nicht auf Operationstische beschränkt. Sie kann auch zur Steuerung anderer medizinischer Geräte, wie etwa Lampensystemen gewinnbringend eingesetzt werden.

Die Erfindung sieht vor, die auf der Fernbedienungsvorrichtung angeordneten Tasteneinheiten, die jeweils eine oder mehrere physische Bedientasten umfassen, mit individuellen, visuell erfassbaren Unterscheidungsmerkmalen zu versehen, anhand derer der Benutzer die verschiedenen Tasteneinheiten eindeutig voneinander unterscheiden kann. Diese Unterscheidungsmerkmale finden sich dann in der Darstellung des medizinischen Gerätes auf der Anzeigeeinheit wieder. So werden auf der Anzeigeeinheit die Piktogramme, welche die durch die jeweiligen Tasteneinheiten betätigbaren Gerätekomponenten repräsentieren, so dargestellt, dass sie diejenigen Unterscheidungsmerkmale aufweisen, mit denen die ihnen zugeordneten Tasteneinheiten versehen sind. Die Darstellung des medizinischen Gerätes auf der Anzeigeeinheit korrespondiert demnach in einer Weise mit den auf der Fernbedienungsvorrichtung angeordneten physischen Tasteneinheiten, dass der Benutzer sofort erkennt, welche Gerätekomponente mit welcher Tasteneinheit betätigt werden kann. Dadurch wird die Handhabung der Fernbedienungsvorrichtung besonders einfach.

Die in der Fernbedienungsvorrichtung enthaltene Steuereinheit ermöglicht es, eine freie Zuordnung zwischen den auf der Fernbedienungsvorrichtung angeordneten physischen Tasteneinheiten und den auf der Anzeigeeinheit dargestellten, die betätigbaren Gerätekomponenten repräsentierenden Piktogrammen vorzunehmen. Hierzu berücksichtigt die Steuereinheit eine Zuordnungsinformation, die für den gerade anzusteuernden Operationstisch eine eindeutige Zuordnung zwischen dessen Gerätekomponenten und den Tasteneinheiten definiert, mit denen sich die Tischkomponenten betätigen lassen. Obgleich die erfindungsgemäße Fernbedienungsvorrichtung ein unveränderbares Tasten-Layout aufweist, ist es mit dieser Maßnahme möglich, die Fernbedienungsvorrichtung flexibel an unterschiedliche medizinische Geräte anzupassen. Diese Anpassung wird dadurch realisiert, dass die die physischen Tasteneinheiten charakterisierenden, unveränderlichen Unterscheidungsmerkmale in der Darstellung auf der Anzeigeeinheit in veränderlicher Zuordnung zu den die betätigbaren Gerätekomponenten repräsentierenden Piktogrammen reproduziert werden. Damit vereint die Erfindung die Vorteile physischer Bedientasten, insbesondere deren haptische Wahrnehmbarkeit, mit den Vorteilen einer grafischen Benutzerschnittstelle, die sich flexibel an unterschiedliche Gerätekonfigurationen anpassen lässt.

Vorzugsweise weisen die physischen Tasteneinheiten als individuelle Unterscheidungsmerkmale unterschiedliche Farben auf. Auf diese Weise ist es besonders einfach möglich, die Korrespondenz zwischen den physischen Tasteneinheiten und den auf der Anzeigeeinheit dargestellten Piktogrammen herzustellen, welche die durch die Tasteneinheiten betätigbaren Gerätekomponenten repräsentieren. Die Erfindung ist jedoch nicht auf die Verwendung unterschiedlicher Farben beschränkt. So ist es ebenso möglich, die Tasteneinheiten etwa mit unterscheidbaren Mustern zu versehen, die auf der Anzeigeeinheit in variabler Zuordnung zu den Piktogrammen reproduziert werden.

Die Fernbedienungsvorrichtung weist vorzugsweise ein mit der Steuereinheit verbundenes Kommunikationsmodul auf, das ausgebildet ist, mit Betätigen der jeweiligen physischen Bedientaste einen Steuerbefehl zum Betätigen der zugeordneten Gerätekomponente an das medizinische Gerät zu senden. In einer besonders bevorzugten Ausgestaltung ist das Kommunikationsmodul ausgebildet, drahtlos, etwa über Funk- oder Infrarotsignale, mit dem medizinischen Gerät zu kommunizieren.

In einer bevorzugten Ausführung ist die Bereitstellungseinheit der Fernbedienungsvorrichtung ausgebildet, die Zuordnungsinformation von dem medizinischen Gerät zu empfangen. Die Bereitstellungseinheit kann dabei Teil des vorstehend genannten Kommunikationsmoduls sein und die Zuordnungsinformation drahtlos oder drahtgebunden an die Fernbedienungsvorrichtung gesendet werden.

In einer alternativen Ausgestaltung umfasst die Bereitstellungseinheit mindestens eine Eingabetaste zum Eingeben der Zuordnungsinformation. Diese Eingabetaste kann eine physische oder eine virtuelle Taste sein, beispielsweise in Form einer auf einem berührungssensitiven Bildschirm angeordneten Schaltfläche.

Die Zuordnungsinformation, die es der Steuereinheit ermöglicht, die auf der Fernbedienungsvorrichtung angeordneten physischen Tasteneinheiten flexibel den betätigbaren Gerätekomponenten des gerade angesprochenen medizinischen Gerätes zuzuordnen, ist beispielsweise eine Modellnummer, die das gerade angesprochene Gerätemodell charakterisiert. Anhand dieser Modellnummer kann die Steuereinheit beispielsweise aus einer Vielzahl von Datensätzen, die in der Fernbedienungsvorrichtung gespeichert sind und verschiedenen Gerätemodellen zugeordnet sind, denjenigen Datensatz auswählen, der zu dem gerade angesprochenen medizinischen Gerät gehört und auf Grundlage dieses Datensatzes die gewünschte Zuordnung vornehmen. Diese Realisierung ist jedoch rein beispielhaft zu verstehen. So ist es z.B. ebenso möglich, dass die von dem medizinischen Gerät an die Fernbedienungsvorrichtung gesendete Zuordnungsinformation schon den passenden Datensatz enthält, so dass in der Fernbedienungsvorrichtung selbst keine auf unterschiedliche Gerätemodelle bezogenen Datensätze bereitgehalten werden müssen.

Vorzugsweise ist die Eingabetaste eine Auswahltaste, mit der aus einer Untergruppe der auf der Anzeigeeinheit dargestellten Piktogramme dasjenige Piktogramm auswählbar ist, dem das jeweilige Unterscheidungsmerkmal zuzuordnen ist. Eine solche Auswahltaste ist insbesondere dann von Vorteil, wenn die Zahl an ansteuerbaren Gerätekomponenten die Zahl an Tasteneinheiten übersteigt, die diesen Gerätekomponenten zuordenbar sind. In diesem Fall ist beispielsweise eine einzige Tasteneinheit vorgesehen, wahlweise eine von mehreren Gerätekomponenten anzusteuern. Die diesen Gerätekomponenten zugeordneten Piktogramme bilden dann die vorstehend genannte Untergruppe. Die gewünschte Auswahl einer der Gerätekomponenten kann zum Beispiel so realisiert werden, dass mit Drücken der Auswahltaste das zugehörige Unterscheidungsmerkmal von einem Piktogramm zum nächsten Piktogramm der Untergruppe wechselt. Auf diese Weise lassen sich auch mit einer vergleichsweise geringen Zahl an physischen Bedientasten medizinische Geräte fernbetätigen, die eine vergleichsweise hohe Zahl an verstellbaren Gerätekomponenten aufweisen.

In einer bevorzugten Ausgestaltung ist die genannte Auswahltaste eine Schaltfläche, die auf einem berührungssensitiven Bildschirm angeordnet ist, der die Anzeigeeinheit bildet. Es ist jedoch ebenso möglich, auch die Auswahltaste als physische Taste auszubilden.

Vorzugsweise weist die jeweilige Tasteneinheit Mittel zum Anzeigen von Tastenfunktionen auf, wobei diese Mittel unabhängig von dem jeweiligen visuell erfassbaren Unterscheidungsmerkmal sind. Die Mittel zum Anzeigen der Tastenfunktionen sind beispielsweise Pfeilsymbole, die sich auf den Bedientasten befinden. Diese Mittel können beispielsweise aber auch durch die Form der jeweiligen Bedientasten oder die Anordnung der Bedientasten zueinander realisiert sein.

In einer bevorzugten Ausführung sind die Piktogramme, welche die betätigbaren Gerätekomponenten repräsentieren, auf der Anzeigeeinheit derart dargestellt, dass sie auf die zugehörigen Tasteneinheiten ausgerichtet sind. So erleichtert beispielsweise eine vertikale Ausrichtung der auf der Anzeigeeinheit dargestellten Piktogramme auf die Tasteneinheiten die Handhabung der Fernbedienungsvorrichtung.

Vorzugsweise steuert die Steuereinheit die Anzeigeeinheit derart, dass die Anzeigeeinheit nicht betätigbare Gerätekomponenten mit Piktogrammen darstellt, die von den Piktogrammen, welche die durch die Tasteneinheiten betätigbaren Gerätekomponenten repräsentieren, unterscheidbar sind. So ist es etwa möglich, die betätigbaren Gerätekomponenten auf der Anzeigeeinheit mit durchgezogenen Linien darzustellen, während nicht betätigbare Gerätekomponenten mit gestrichelten Linien dargestellt sind. Der Benutzer kann so leichter erfassen, welche der Gerätekomponenten betätigbar sind und welche nicht.

Nach einem weiteren Aspekt der Erfindung ist ein System mit einer Fernbedienungsvorrichtung vorstehend erläuterter Art und mindestens einem durch die Fernbedienungsvorrichtung steuerbaren medizinischen Gerät mit mehreren betätigbaren Gerätekomponenten gemäß nebengeordnetem Anspruch 13 vorgesehen.

Ferner sieht die Erfindung ein Verfahren zum Steuern mindestens eines mit mehreren betätigbaren Gerätekomponenten versehenen medizinischen Gerätes mittels einer Fernbedienungsvorrichtung nach nebengeordnetem Anspruch 14 vor.

Die Erfindung wird im Folgenden anhand der Figuren näher erläutert. Darin zeigen:
- Fig. 1: ein Blockdiagramm, das schematisch den Aufbau eines erfindungsgemäßen Systems zeigt, das eine Fernbedienungsvorrichtung und mindestens einen Operationstisch umfasst;
- Fig. 2: eine Darstellung, welche eine Fernbedienungsvorrichtung nach einem ersten Ausführungsbeispiel und einen über die Fernbedienungsvorrichtung gesteuerten Operationstisch zeigt;
- Fig. 3: eine Darstellung, welche die Fernbedienungsvorrichtung nach erstem Ausführungsbeispiel und den Operationstisch in einer gegenüber Figur 2 geänderten Konfiguration zeigt;
- Fig. 4: eine Darstellung, welche die Fernbedienungsvorrichtung nach erstem Ausführungsbeispiel und einen anderen über die Fernbedienungsvorrichtung gesteuerten Operationstisch zeigt;
- Fig. 5: eine Darstellung, welche eine Fernbedienungsvorrichtung nach einem zweiten Ausführungsbeispiel und einen über die Fernbedienungsvorrichtung gesteuerten Operationstisch zeigt;
- Fig. 6: eine Darstellung, die weitere Beispiele für die Realisierung der individuellen, visuell erfassbaren Unterscheidungsmerkmale zeigt;
- Fig. 7: eine Darstellung, die ein weiteres Beispiel für die Realisierung der individuellen, visuell erfassbaren Unterscheidungsmerkmale in Zuordnung zur Darstellung des Operationstisches auf dem Bildschirm zeigt; und
- Fig. 8: eine Darstellung, die ein weiteres Beispiel für die Realisierung der individuellen, visuell erfassbaren Unterscheidungsmerkmale zeigt.

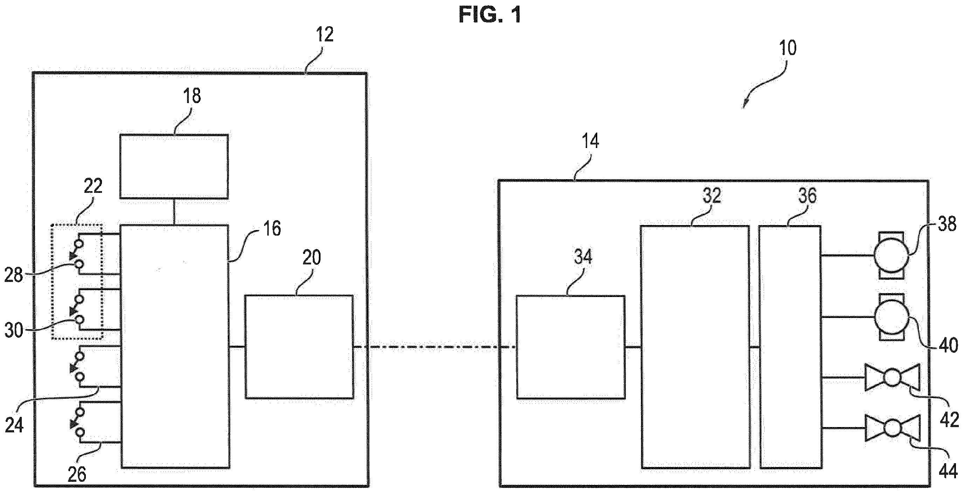

In dem Blockdiagramm nach Figur 1 ist rein schematisch ein erfindungsgemäßes Operationstischsystem 10 gezeigt, das eine Fernbedienungsvorrichtung 12 und einen Operationstisch 14 umfasst, der von einem Benutzer über die Fernbedienungsvorrichtung 12 gesteuert werden kann.

Die Fernbedienungsvorrichtung 12 weist eine Steuereinheit 16 auf, welche die verschiedenen Funktionseinheiten der Fernbedienungsvorrichtung 12 steuert. Die Steuereinheit 16 ist mit einer Anzeigeeinheit 18, die einen Bildschirm aufweist, und einem Kommunikationsmodul 20 gekoppelt. Ferner ist die Steuereinheit 16 mit mehreren Tasteneinheiten 22, 24 und 26 verbunden, wobei die Tasteneinheit 22 zwei physische Bedientasten 28 und 30 umfasst, während die Tasteneinheiten 24 und 26 jeweils durch eine einzige physische Bedientaste gebildet sind. Indem der Benutzer die Tasteneinheiten 22, 24 und 26 von Hand betätigt, kann er den Operationstisch 14 steuern.

Der Operationstisch 14 enthält eine Steuereinheit 32, die mit einem Kommunikationsmodul 34 und einer Treibereinheit 36 verbunden. Die Treibereinheit 36 ist wiederum mit verschiedenen ansteuerbaren Funktionseinheiten 38, 40, 42 und 44 gekoppelt ist. In dem Beispiel nach Figur 1 sind die Funktionseinheiten 38 und 40 Aktoren, die auf (in Figur 1 nicht gezeigte) verstellbare Tischsegmente des Operationstisches wirken, während die Funktionseinheiten 42 und 44 andersartige Tischkomponenten bezeichnen, z.B. Lampen.

Die Fernbedienungsvorrichtung 12 und der Operationstisch 14 sind über die beiden Kommunikationsmodule 20 und 34 drahtgebunden oder drahtlos miteinander gekoppelt. Im Falle einer drahtlosen Kopplung kommunizieren die beiden Kommunikationsmodule 20 und 34 beispielsweise über Infrarot- oder Funksignale miteinander. Um die an dem Operationstisch 14 vorgesehenen Funktionseinheiten 38, 40, 42 und 44 über die Fernbedienungsvorrichtung 12 wie gewünscht zu steuern, betätigt der Benutzer wahlweise eine der an der Fernbedienungsvorrichtung 12 vorgesehenen Tasteneinheiten 22, 24 und 26. Mit Betätigen eine der Tasteneinheiten 22, 24, 26 empfängt die Steuereinheit 16 ein Betätigungssignal und setzt dieses in ein Steuersignal um, das sie dem Kommunikationsmodul 20 zuführt. Das Kommunikationsmodul 20 sendet dann das Steuersignal an das in dem Operationstisch 14 enthaltene Kommunikationsmodul 34. Dieses leitet das Steuersignal an die Steuereinheit 32 weiter, die das Steuersignal dann an die Treibereinheit 36 ausgibt. Die Treibereinheit 36 steuert schließlich mit Hilfe dieses Steuersignals eine der Tischkomponenten 38, 40, 42 und 44 an.

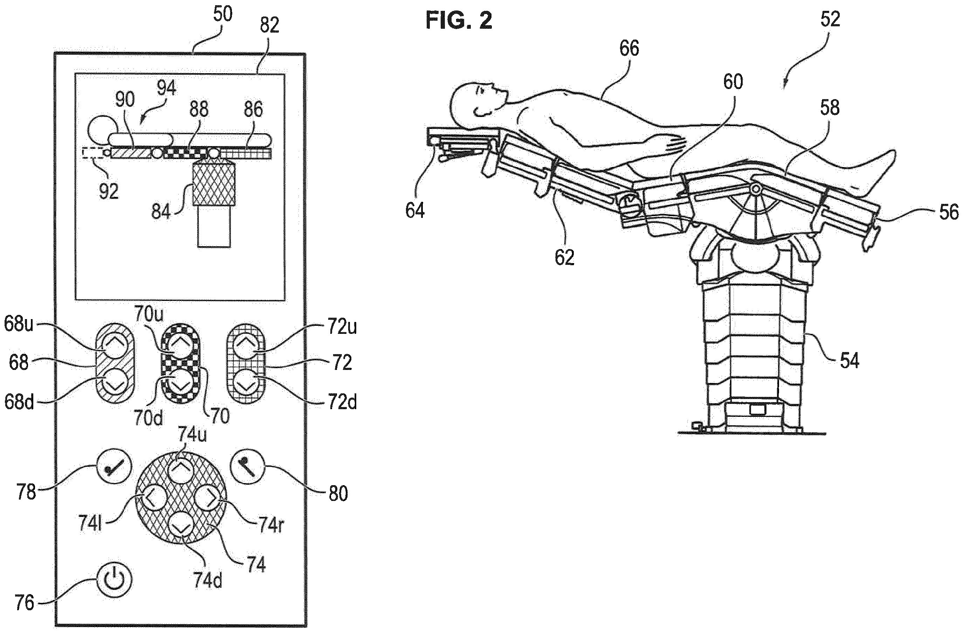

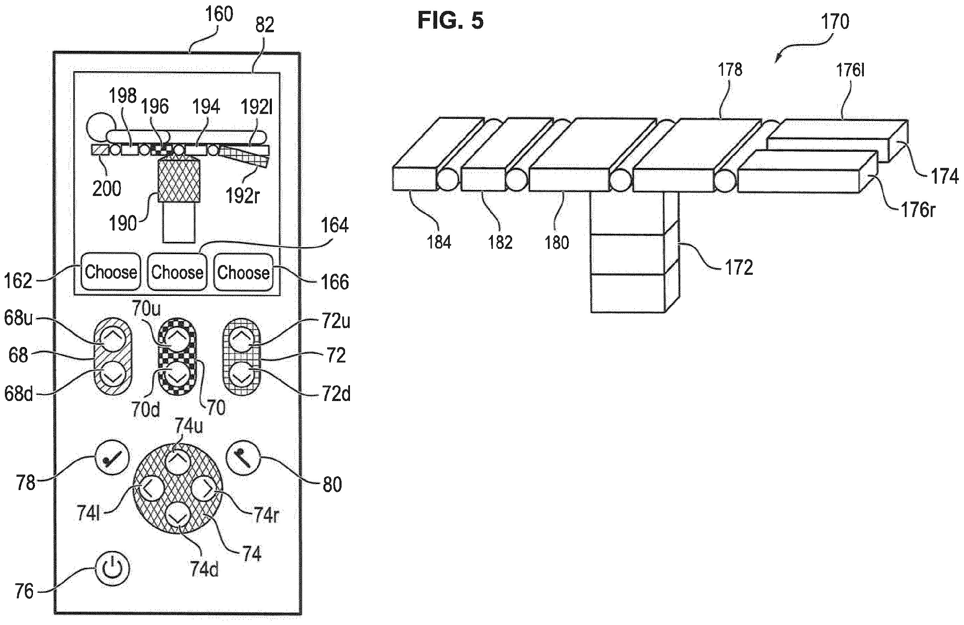

Um die an der Fernbedienungsvorrichtung 12 vorgesehenen physischen Tasteneinheiten 22, 24, 26 den Tischkomponenten 38, 40, 42, 44 zuzuordnen, empfängt das Kommunikationsmodul 20 der Fernbedienungsvorrichtung 12 von dem in dem Operationstisch 14 enthaltenen Kommunikationsmodul 34 eine Zuordnungsinformation und leitet diese Zuordnungsinformation an die Steuereinheit 16 weiter. Anhand dieser Zuordnungsinformation stellt die Steuereinheit 16 eine eindeutige Zuordnung zwischen den Tasteneinheiten 22, 24, 26 und den Tischkomponenten 38, 40, 42 und 44 her. Zudem veranlasst die Steuereinheit 16 die Anzeigeeinheit 18, den Operationstisch 14 auf ihrem Bildschirm derart darzustellen, dass der Benutzer die von der Steuereinheit 16 vorgenommene Zuordnung zwischen den physischen Tasteneinheiten 22, 24 und 26 und den Tischkomponenten 38, 40, 42 und 44 visuell unmittelbar erfassen kann. Dies wird im Weiteren anhand der in den Figuren 2 und 5 gezeigten Anwendungsbeispiele im Einzelnen erläutert.

Wie vorstehend erwähnt, bildet bei dem System nach Figur 1 das in der Fernbedienungsvorrichtung 12 enthaltene Kommunikationsmodul 20 eine Bereitstellungseinheit, die von dem Operationstisch 14 die Zuordnungsinformation erhält, auf deren Grundlage die Steuereinheit 16 der Fernbedienungsvorrichtung 12 eine eindeutige Zuordnung zwischen den Tasteneinheiten 22, 24, 26 und den Tischkomponenten 38, 40, 42 und 44 definiert. Diese Art der Bereitstellung der Zuordnungsinformation ist jedoch rein beispielhaft zu verstehen. So ist die vorstehend genannte Bereitstellungseinheit nicht notwendigerweise durch das in der Fernbedienungsvorrichtung 12 enthaltene Kommunikationsmodul 20 gebildet. Sie kann beispielsweise auch durch eine an der Fernbedienungsvorrichtung 12 vorgesehene Eingabetaste realisiert sein, über die der Benutzer die Zuordnungsinformation eingibt.

In den Figuren 2 bis 5 sind zur Erläuterung der erfindungsgemäßen Lehre verschiedene Anwendungsbeispiele gezeigt, denen das in Figur 1 rein schematisch dargestellte System 10 zugrunde liegt.

Figur 2 zeigt eine Fernbedienungsvorrichtung 50 als erstes Ausführungsbeispiel zusammen mit einem Operationstisch 52, der sich über die Fernbedienungsvorrichtung 50 steuern lässt. Der Operationstisch 52 nach Figur 2 weist eine Tischsäule 54 auf, die sich über geeignete Aktoren sowohl in vertikaler als auch in horizontaler Richtung verstellen lässt. Auf der Tischsäule 54 sitzt eine Patientenlagerfläche 56, die aus einem Unterschenkelsegment 58, einem Oberschenkelsegment 60, einem Rückensegment 62 und einem Kopfsegment 64 zusammengesetzt ist. Die Segmente 58, 60, 62 und 64 sind gelenkig miteinander verbunden, so dass sich die Patientenlagerfläche 56, auf der ein Patient 66 gelagert ist, in eine gewünschte Form bringen lässt. In der Tischkonfiguration nach Figur 2 lassen sich das Unterschenkelsegment 58, das Oberschenkelsegment 60 und das Rückensegment 62 wiederum über geeignete Aktoren verstellen. Das Kopfsegment 64 lässt sich dagegen in dieser Konfiguration nur von Hand verstellen.

Die Fernbedienungsvorrichtung nach Figur 2 weist mehrere Tasteneinheiten 68, 70, 72 und 74 auf, die auf Grundlage der von dem Operationstisch 52 an die Fernbedienungsvorrichtung 50 gesendeten Zuordnungsinformation den verschiedenen Tischkomponenten 54, 58, 60 und 62 zugeordnet sind. Im Einzelnen ist die Tasteneinheit 68 dem Rücksegment 62 zugeordnet und weist zwei physische Bedientasten 68u und 68d auf, über die sich das Rückensegment 62 nach oben bzw. nach unten bewegen lässt. Die Tasteneinheit 70 ist dem Oberschenkelsegment 60 zugeordnet und weist ebenfalls zwei physische Bedientasten 70u und 70d auf. Über die Bedientaste 70u lässt sich das Oberschenkelsegment 60 nach oben und über die Bedientaste 70d nach unten bewegen. Die Tasteneinheit 72 ist dem Unterschenkelsegment 58 zugeordnet. Auch sie weist zwei physische Bedientasten 72u und 72d auf, über die sich das Unterschenkelsegment 58 nach oben bzw. nach unten bewegen lässt. Die Tasteneinheit 74 ist schließlich der Tischsäule 54 zugeordnet und umfasst vier physische Bedientasten 74u, 74d, 74l und 74r. Über die Bedientasten 74u und 74d lässt sich die Tischsäule in vertikaler Richtung nach oben bzw. nach unten bewegen. Über die Bedientasten 74l und 74r kann die Tischsäule 54 in horizontaler Richtung nach links bzw. nach rechts bewegt werden.

Die Fernbedienungsvorrichtung 50 hat drei weitere physische Bedientasten 76, 78 und 80. Die Bedientaste 76 dient dazu, die Fernbedienungsvorrichtung 50 ein- und auszuschalten. Über die Bedientasten 78, 80 lassen sich weitere Tischfunktionen realisieren, die jedoch für das Verständnis der vorliegenden Erfindung von untergeordneter Bedeutung sind.

Die Fernbedienungsvorrichtung 50 weist einen Bildschirm 82 auf, auf dem der Operationstisch 52 schematisch dargestellt wird. Zum Zwecke dieser schematischen Darstellung werden auf dem Bildschirm 82 verschiedene Piktogramme 84, 86, 88, 90, 92 und 94 angezeigt. Dabei repräsentiert das Piktogramm 84 die Tischsäule 54, das Piktogramm 86 das Unterschenkelsegment 58, das Piktogramm 88 das Oberschenkelsegment 60, das Piktogramm 90 das Rückensegment 62, das Piktogramm 92 das Kopfsegment 64 und das Piktogramm 94 den Patienten 66.

Die physischen Tasteneinheiten 68, 70, 72 und 74 sind so ausgebildet, dass sie jeweils ein individuelles, von dem Benutzer visuell erfassbares Unterscheidungsmerkmal aufweisen, wodurch es dem Benutzer möglich ist, die Tasteneinheiten 68, 70, 72 und 74 visuell voneinander zu unterscheiden. Ein bevorzugtes Unterscheidungsmerkmal ist beispielsweise die Farbe der jeweiligen Tasteneinheit. Weisen die Tasteneinheiten 68, 70, 72 und 74 deutlich voneinander unterscheidbare Farben auf, so kann der Benutzer die Tasteneinheiten 68, 70, 72 und 74 besonders einfach visuell voneinander unterscheiden. Es sind jedoch auch andere Unterscheidungsmerkmale, wie beispielsweise unterschiedliche Muster, Schraffuren etc. denkbar, wie sie in der Darstellung nach Figur 2 rein beispielhaft veranschaulicht sind.

Die Erfindung sieht nun vor, die unveränderlichen Unterscheidungsmerkmale, welche die physischen Tasteneinheiten 68, 70, 72 und 74 eindeutig charakterisieren, in der Darstellung des Operationstisches 52 auf dem Bildschirm 82 zu reproduzieren. Sind beispielsweise die Tasteneinheiten 68, 70, 72 und 74 mit unterschiedlichen Farben versehen, so spiegeln sich diese Farben auch in der Darstellung auf dem Bildschirm 82 wieder. In dem Anwendungsbeispiel nach Figur 2 bedeutet dies im Einzelnen, dass das auf dem Bildschirm 82 dargestellte Piktogramm 90, welches das Rückensegment 82 repräsentiert, die gleiche Farbe aufweist wie die Tasteneinheit 68, die über die Zuordnungsinformation der Rückenplatte 62 zugeordnet ist. Entsprechend weist das auf dem Bildschirm 82 dargestellte Piktogramm 88, welches das Oberschenkelsegment 60 repräsentiert, die gleiche Farbe auf, wie die Tasteneinheit 70, die über die Zuordnungsinformation dem Oberschenkelsegment 60 zugeordnet ist. Das auf dem Bildschirm 82 dargestellte Piktogramm 86, welches das Unterschenkelsegment 58 repräsentiert, hat die gleiche Farbe wie die Tasteneinheit 72, die über die Zuordnungsinformation der Unterschenkelplatte 58 zugeordnet ist. Schließlich hat das auf dem Bildschirm 82 dargestellte Piktogramm 84, das die Tischsäule 54 repräsentiert, die gleiche Farbe wie die Tasteneinheit 74, die über die Zuordnungsinformation der Tischsäule 54 zugeordnet ist.

Während die Piktogramme 84, 86, 88 und 90, welche die über Aktoren verstellbaren Tischkomponenten 54, 58, 60 und 62 repräsentieren, auf dem Bildschirm 82 mit durchgezogenen Umrisslinien dargestellt sind, ist das Piktogramm 92, welches das lediglich manuell, d.h. nicht über einen Aktor verstellbare Kopfsegment 64 repräsentiert, auf dem Bildschirm 82 mit einer gestrichelten Umrisslinie dargestellt. Dadurch kann der Benutzer sofort erkennen, dass sich das Kopfsegment 64 in der vorliegenden Konfiguration nicht über die Fernbedienungsvorrichtung 50 verstellen lässt.

Wie das Beispiel nach Figur 2 zeigt, ermöglicht es die Erfindung, das unveränderliche Tasten-Layout der Fernbedienungsvorrichtung 50 in Form der physischen Tasteneinheiten 68, 70, 72 und 74 flexibel an die vorliegende Konfiguration des Operationstisches 52 anzupassen. Dies wird dadurch erreicht, dass die die physischen Tasteneinheiten 68, 70, 72 und 74 charakterisierenden, unveränderlichen Unterscheidungsmerkmale, z.B. Farben, in der Darstellung auf dem Bildschirm 82 in veränderlicher Zuordnung zu den Piktogrammen 84, 86, 88 und 90, welche die verstellbaren Tischkomponenten 54, 58, 60 und 62 repräsentieren, reproduzierbar sind.

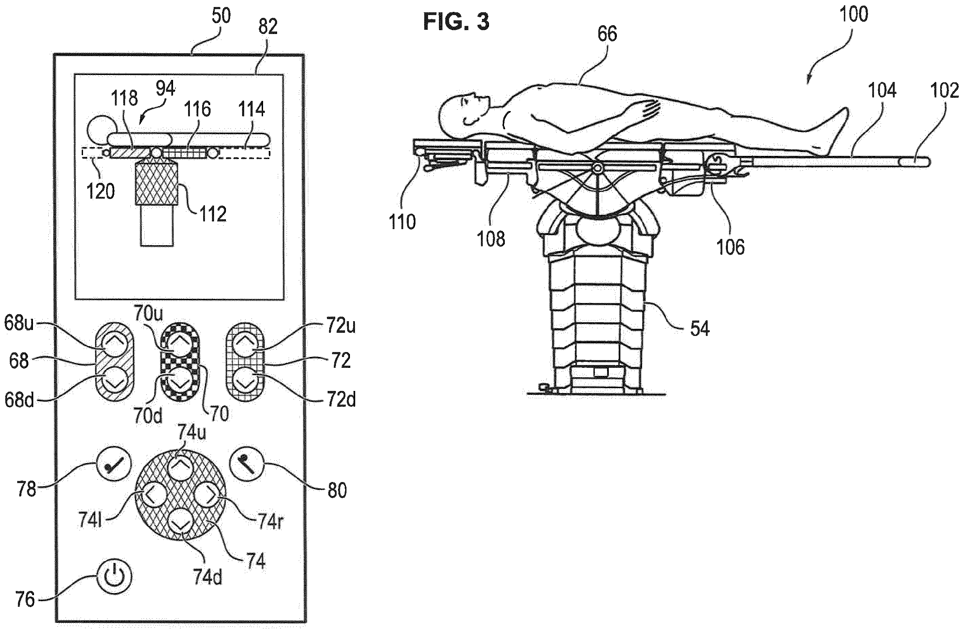

Die flexible Anpassung der Fernbedienungsvorrichtung 50 an unterschiedliche Tischkonfigurationen ist in Figur 3 veranschaulicht, welche die Fernbedienungsvorrichtung 50 nach Figur 2 zusammen mit einer Tischkonfiguration zeigt, die von der Konfiguration nach Figur 2 abweicht.

Der in Figur 3 mit 100 bezeichnete Operationstisch ist dem gleichen Tischmodell zuzuordnen wie der Operationstisch 52 nach Figur 2, unterscheidet sich jedoch von letzterem durch die Konfiguration seiner Patientenlagerfläche 102. Die Patientenlagerfläche 102 umfasst ein Unterschenkelsegment 104, ein Oberschenkelsegment 106, ein Rückensegment 108 und ein Kopfsegment 110. Wie in der Konfiguration nach Figur 2 sind das Oberschenkelsegment 106 und das Rückensegment 108 über Aktoren verstellbar, während das Kopfsegment 110 lediglich manuell verstellbar ist. Im weiteren Unterschied zur Konfiguration nach Figur 2 ist bei der in Figur 3 dargestellten Konfiguration auch das Unterschenkelsegment 104 nicht über Aktoren, sondern lediglich manuell verstellbar.

Die Konfiguration nach Figur 3 spiegelt sich in der Darstellung des Operationstisches 100 auf dem Bildschirm 82 der Fernbedienungsvorrichtung 50 wider. Dort repräsentiert das mit einer durchgezogenen Umrisslinie dargestellte Piktogramm 112 die über Aktoren verstellbare Tischsäule 54, das mit einer gestrichelten Umrisslinie dargestellte Piktogramm 114 das nur manuell verstellbare Unterschenkelsegment 104, das mit einer durchgezogenen Umrisslinie dargestellte Piktogramm 116 das über Aktoren verstellbare Oberschenkelsegment 106, das mit einer durchgezogenen Umrisslinie dargestellte Piktogramm 118 das über Aktoren verstellbare Rückensegment 108 und das mit einer gestrichelten Umrisslinie dargestellte Piktogramm 120 das nur manuell verstellbare Kopfsegment 110.

Über die Zuordnungsinformation, die der Operationstisch 102 an die Fernbedienungsvorrichtung 50 sendet, ist die Tasteneinheit 68 dem Rückensegment 108, die Tasteneinheit 72 dem Oberschenkelsegment 106 und die Tasteneinheit 74 der Tischsäule 54 zugeordnet. Die Tasteneinheit 70 ist in dieser Konfiguration deaktiviert, d.h. funktionslos.

In der Konfiguration nach Figur 3 hat somit das Piktogramm 112 die Farbe der Tasteneinheit 74, das Piktogramm 116 die Farbe der Tasteneinheit 72 und das Piktogramm 118 die Farbe der Tasteneinheit 68.

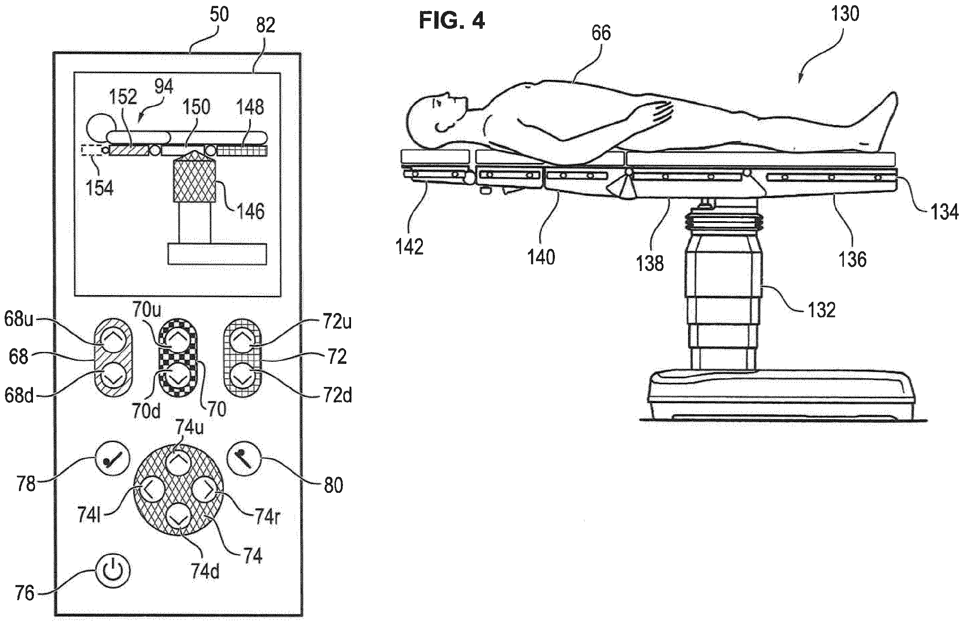

Figur 4 zeigt ein weiteres Anwendungsbeispiel, bei dem die Fernbedienungsvorrichtung 50 zur Ansteuerung eines Tischmodells genutzt wird, das verschieden von dem in den Figuren 2 und 3 gezeigten Tischmodell ist.

Der in Figur 4 mit 130 bezeichnete Operationstisch hat eine über Aktoren sowohl vertikal als auch horizontal verstellbare Tischsäule 132, auf der eine Patientenlagerfläche 134 sitzt. Die Patientenlagerfläche 134 umfasst ein Unterschenkelsegment 136, ein Oberschenkelsegment 138, ein Rückensegment 140 und ein Kopfsegment 142. Das Unterschenkelsegment 136 und das Rückensegment 140 sind über Aktoren verstellbar. Das Kopfsegment 142 ist lediglich manuell verstellbar. Das Oberschenkelsegment 138 ist bei diesem Modell überhaupt nicht verstellbar.

Über die Zuordnungsinformation, die der Operationstisch 130 an die Fernbedienungsvorrichtung 50 sendet, ist die Tasteneinheit 68 dem Rückensegment 140, die Tasteneinheit 72 dem Unterschenkelsegment 136 und die Tasteneinheit 74 der Tischsäule 132 zugeordnet. Die Tasteneinheit 70 ist wiederum deaktiviert.

In der Darstellung auf dem Bildschirm 82 repräsentiert ein Piktogramm 146 die Tischsäule 132, ein Piktogramm 148 das Unterschenkelsegment 136, ein Piktogramm 150 das Oberschenkelsegment 138, ein Piktogramm 152 das Rückensegment 140 und ein Piktogramm 154 das Kopfsegment 142. Die Piktogramme 146, 148 und 152, welche die über Aktoren verstellbaren Tischkomponenten 132, 136 bzw. 140 repräsentieren, sind wiederum mit durchgezogenen Umrissrisslinien dargestellt. Dagegen ist das Piktogramm 154, welches das lediglich manuell verstellbare Kopfsegment 142 repräsentiert, mit einer gestrichelten Umrisslinie dargestellt.

Entsprechend der von der Fernbedienungsvorrichtung 50 empfangenen Zuordnungsinformation hat das auf dem Bildschirm 82 dargestellte Piktogramm 146 die Farbe der Tasteneinheit 74, das Piktogramm 148 die Farbe der Tasteneinheit 72 und das Piktogramm 152 die Farbe der Tasteneinheit 68.

Figur 5 zeigt ein letztes Anwendungsbeispiel mit einer Fernbedienungsvorrichtung 160, die sich von der in den Figuren 2 bis 4 dargestellten Fernbedienungsvorrichtung 50 durch drei zusätzliche Auswahltasten 162, 164 und 166 unterscheidet. Die Auswahltasten 162, 164 und 166 sind in dem vorliegenden Ausführungsbeispiel virtuelle Bedientasten, die auf dem berührungssensitiv ausgeführten Bildschirm 82 angeordnet sind. Abgesehen von den Auswahltasten 162, 164 und 166 ist die Fernbedienungsvorrichtung 160 identisch mit der Fernbedienungsvorrichtung 50 nach den Figuren 2 bis 4.

In dem Anwendungsbeispiel nach Figur 5 ist ein Operationstisch 170 vorgesehen, der komplexer aufgebaut ist als die in den Figuren 2 bis 4 gezeigten Operationstische. Der Operationstisch 170 umfasst eine über Aktoren sowohl vertikal als auch horizontal verstellbare Tischsäule 172 und eine darauf angeordnete Patientenlagerfläche 174 umfasst. Die Patientenlagerfläche 174 ist gebildet aus zwei unabhängig voneinander verstellbaren Unterschenkelsegmenten 176l, 176r, einem Oberschenkelsegment 178, einem unteren Rückensegment 180, einem oberen Rückensegment 182 und einem Kopfsegment 184. Alle Tischsegmente 176r, 176l, 178, 180, 182 und 184 sind über Aktoren individuell verstellbar. Somit verfügt der Operationstisch 174 insgesamt über sieben Tischsegmente, die sich über geeignete Aktoren individuell steuern lassen.

Demgegenüber weist die Fernbedienungsvorrichtung 160 nur die vier physischen Tasteneinheiten 68, 70, 72 und 74 auf. Um dennoch alle sieben Tischkomponenten 172, 176l, 176r, 178, 180, 182 und 184 des Operationstisches 170 über die Fernbedienungsvorrichtung 160 steuern zu können, verfügt die Fernbedienungsvorrichtung 160 über die drei eingangs genannten Auswahltasten 162, 164 und 166, die auf dem berührungssensitiven Bildschirm 82 dargestellt sind.

In dem Anwendungsbeispiel nach Figur 5 empfängt die Fernbedienungsvorrichtung 160 zunächst eine erste Zuordnungsinformation von dem Operationstisch 170 und dann eine zweite, gleichsam verfeinernde Zuordnungsinformation über die Auswahltasten 162, 164 und 166. Anhand der ersten Zuordnungsinformation wird die Tasteneinheit 74 der Tischsäule 172 zugeordnet. Ferner erfolgt über diese erste Zuordnungsinformation im Hinblick auf die Tasteneinheiten 68, 70 und 72 eine initiale Zuordnung dergestalt, dass jede dieser Tasteneinheiten jeweils eine von zwei möglichen Tischkomponenten zugeordnet wird. Im Einzelnen wird der Tasteneinheit 68 initial entweder das obere Rückensegment 182 oder das Kopfsegment 184 zugeordnet. Entsprechend wird der Tasteneinheit 70 initial entweder das Oberschenkelsegment 178 oder das untere Rückensegment 180 zugeordnet. Der Tasteneinheit 72 wird initial entweder das Unterschenkelsegment 176l oder das Unterschenkelsegment 176r zugeordnet.

Diese initiale Zuordnung kann dann über die Auswahltasten 162, 164 und 166 geändert werden. Dabei dient die Auswahltaste 162 der Änderung der Zuordnung für die Tasteneinheit 68, die Auswahltaste 164 der Änderung der Zuordnung für die Tasteneinheit 70 und die Auswahltaste 166 der Änderung der Zuordnung für die Tasteneinheit 72.

In der Darstellung auf dem Bildschirm 82 repräsentiert ein Piktogramm 190 die Tischsäule 172, ein Piktogramm 192l das Unterschenkelsegment 176l, ein Piktogramm 192r das Unterschenkelsegment 176r, ein Piktogramm 194 das Oberschenkelsegment 178, ein Piktogramm 196 das untere Rückensegment 180, ein Piktogramm 198 das obere Rückensegment 182 und ein Piktogramm 200 das Kopfsegment 184.

Gemäß der in Figur 5 rein bespielhaft gezeigten Zuordnung hat das Piktogramm 190, das die Tischsäule 172 repräsentiert, die Farbe der Tasteneinheit 74. Entsprechend hat das Piktogramm 192r, das das Unterschenkelsegment 176r repräsentiert, die Farbe der Tasteneinheit 72. Das Piktogramm 196, das die untere Rückenplatte 180 repräsentiert, hat in dieser Zuordnung die Farbe der Tasteneinheit 70. Das Piktogramm 200, das die Kopfplatte 184 repräsentiert, hat in der Zuordnung nach Figur 5 die Farbe der Tasteneinheit 68.

Wie oben erläutert, lassen sich mit Hilfe der Auswahltasten 162, 164 und 166 die Zuordnungen bezogen auf die Tasteneinheiten 68, 70 und 72 jeweils zwischen zwei möglichen Zuständen ändern. Drückt der Benutzer beispielsweise ausgehend von der in Figur 5 gezeigten Zuordnung die Auswahltaste 162, so wird die Zuordnung der Tasteneinheit 68 zu dem Kopfsegment 184 aufgehoben und stattdessen eine Zuordnung zu dem oberen Rückensegment 182 definiert. Auf dem Bildschirm 82 spiegelt sich diese Zuordnungsänderung dadurch wider, dass die Farbe der Tasteneinheit 68 von dem Piktogramm 200 auf das Piktogramm 198 wechselt. Ein entsprechender Farbwechsel findet zwischen den Piktogrammen 196 und 194 statt, wenn der Benutzer die Auswahltaste 164 betätigt, und zwischen den Piktogrammen 192r und 192l, wenn der Benutzer die Auswahltaste 166 betätigt.

In den vorstehend erläuterten Ausführungsbeispielen weisen die Bedientasten 68u, 68d der Tasteneinheit 68, die Bedientasten 70u, 70d der Tasteneinheit 70, die Bedientasten 72u, 72d der Tasteneinheit 72 und die Bedientaste 74u, 74d, 74l, 74r der Tasteneinheit 74 jeweils ein Pfeilsymbol auf, welches die Funktion der jeweiligen Bedientaste anzeigt. Beispielsweise gibt der auf der Bedientaste 74u der Tasteneinheit 74 vorgesehene, nach oben weisende Pfeil an, dass die Funktion der Bedientaste 74u darin liegt, die ihr zugeordnete Tischkomponente nach oben zu bewegen. Dementsprechend weisen die auf den Bedientasten 74l, 74r, 74d vorgesehenen Pfeilsymbole darauf hin, dass sich mit diesen Bedientasten die zugehörige Tischkomponente nach links, nach rechts bzw. nach unten bewegen lässt. Entsprechendes gilt für die Pfeilsymbole der Tasteneinheiten 68, 70 und 72.

Die vorstehend genannten Tastensymbole bilden rein beispielhaft zu verstehende Mittel zum Anzeigen der jeweiligen Tastenfunktion. Diese Mittel sind unabhängig von den jeweiligen visuell erfassbaren Unterscheidungsmerkmal, also z.B. der Farbe, der Schraffur etc. der zugehörigen Tasteneinheit 68, 70, 72 bzw. 74. In der Darstellung auf dem Bildschirm 82 werden allein die individuellen Unterscheidungsmerkmale der Tasteneinheiten 68, 70, 72, 74, d.h. deren Farbe, Schraffur etc., genutzt, um dem Benutzer die Zuordnung zwischen der jeweiligen Tasteneinheit und der zugehörigen Tischkomponente anzuzeigen. Demgegenüber ist es nicht erforderlich, auf dem Bildschirm 82 zusätzlich die Mittel zur Anzeige der Tastenfunktionen, z.B. die in den Figuren 3 bis 5 gezeigten Pfeilsymbole darzustellen.

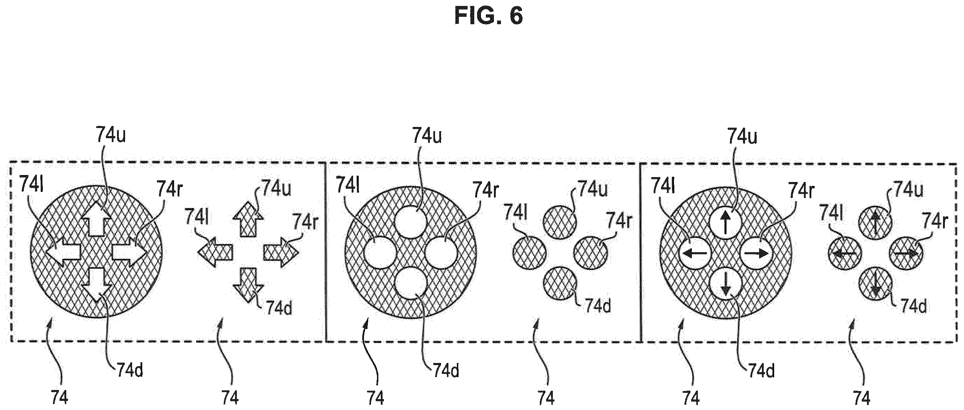

Die auf den Bedientasten vorgesehenen Pfeilsymbole sind wiederum rein beispielhaft zu verstehen. So lassen sich die Tastenfunktionen auch in anderer Weise darstellen, wie für die Tasteneinheit 74 in Figur 6 anhand von drei Beispielen veranschaulicht ist. In jedem dieser Beispiele stellt das jeweilige Schraffurmuster das individuelle, visuell erfassbare Unterscheidungsmerkmal dar, das auf dem Bildschirm 82 in dem zugehörigen Piktogramm verwendet wird, um die Beziehung zwischen der Tasteneinheit und der durch diese Tateneinheit ansteuerbaren Tischkomponente darzustellen. Demgegenüber zeigen in den Beispielen nach Figur 6 die Formgebung der Bedientasten (links), die Anordnung der Bedientasten zueinander (Mitte) bzw. die auf den Bedientasten vorgesehenen Pfeilsymbole (rechts) die jeweiligen Tastenfunktionen dar, die auf dem Bildschirm 82 nicht wiedergegeben werden müssen.

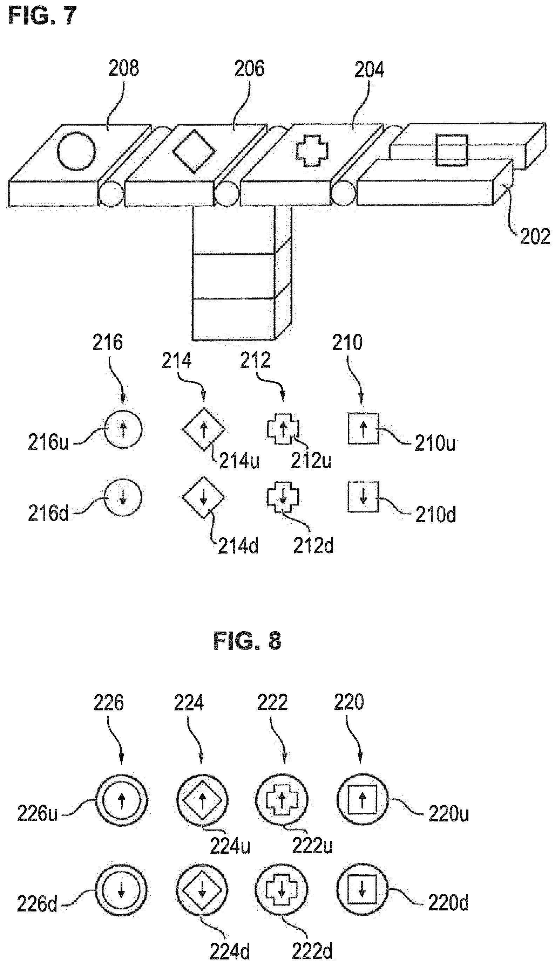

Die vorstehend erläuterten Ausführungsformen sind rein beispielhaft zu verstehen. So sind die individuellen, visuell erfassbaren Unterscheidungsmerkmale der Tasteneinheiten, die auf dem Bildschirm 82 durch die zugehörigen Piktogramme reproduziert werden, nicht auf unterschiedliche Farben, Muster oder Schraffuren beschränkt. Beispielsweise ist es auch denkbar, die Formgebung der in den Tasteneinheiten angeordneten Bedientasten als Unterscheidungsmerkmal zu nutzen und auf dem Bildschirm 82 darzustellen. Dies ist beispielhaft in Figur 7 veranschaulicht. Dort ist die Bildschirmdarstellung eines mit mehreren Tischkomponenten versehenen Operationstisches mit Hilfe von Piktogrammen 202, 204, 206, 208 verschiedenen Tasteneinheiten 210, 212, 214 und 216 gegenübergestellt, die jeweils zwei Bedientasten 210u, 210d, zwei Bedientasten 212u, 212d, zwei Bedientasten 214u, 214d bzw. zwei Bedientasten 216u, 216d umfassen. Wie in Figur 7 gezeigt, weisen die Bedientasten der Tasteneinheiten 210, 212, 214 und 216 unterschiedliche Formen als individuelle Unterscheidungsmerkmale auf, die in der Darstellung auf dem Bildschirm 82 reproduziert werden können, um die Zuordnung zu den ansteuerbaren Tischkomponenten herzustellen, die durch die Piktogramme 202, 204, 206 bzw. 208 repräsentiert sind.

In Figur 8 ist ein weiteres Beispiel für die Realisierung der auf dem Bildschirm 82 reproduzierten individuellen Unterscheidungsmerkmale der Tasteneinheiten gezeigt. In diesem Beispiel sind vier Tasteneinheiten 220, 222, 224 und 226 vorgesehen, die jeweils zwei Bedientasten 220u, 220d, zwei Bedientaten 224u, 224d bzw. zwei Bedientasten 226u, 226d umfassen. Sämtliche Bedientasten der Tasteneinheiten 220, 222, 224, 226 sind rund. Jedoch unterscheiden sich die Bedientasten der verschiedenen Tasteneinheiten 220, 222, 224 und 226 durch unterschiedlich geformte Symbole, die als individuelle Unterscheidungsmerkmale in der Darstellung auf dem Bildschirm 82 genutzt werden können.

### Bezugszeichenliste

- 10: Operationstischsystem
- 12: Fernbedienungsvorrichtung
- 14: Operationstisch
- 16: Steuereinheit
- 18: Anzeigeeinheit
- 20: Kommunikationsmodul
- 22, 24, 26: Tasteneinheiten
- 28, 30: Bedientasten
- 32: Steuereinheit
- 34: Kommunikationsmodul
- 36: Treibereinheit
- 38, 40: Aktoren
- 42, 44: ansteuerbare Funktionseinheiten
- 50: Fernbedienungsvorrichtung
- 52: Operationstisch
- 54: Tischsäule
- 56: Patientenlagerfläche
- 58: Unterschenkelsegment
- 60: Oberschenkelsegment
- 62: Rückensegment
- 64: Kopfsegment
- 66: Patient
- 68: Tasteneinheit
- 68u, 68d: Bedientasten
- 70: Tasteneinheit
- 70u, 70d: Bedientasten
- 72: Tasteneinheit
- 72u, 72d: Bedientasten
- 74: Tasteneinheit
- 74u, 74d, 74l, 74r: Bedientasten
- 76, 78, 80: Bedientasten
- 82: Bildschirm
- 100: Operationstisch
- 102: Patientenlagerfläche
- 104: Unterschenkelsegment
- 106: Oberschenkelsegment
- 108: Rückensegment
- 110: Kopfsegment
- 112, 114, 116, 118, 120: Symbole
- 160: Fernbedienungsvorrichtung
- 162, 164, 166: Auswahltasten
- 170: Operationstisch
- 172: Tischsäule
- 174: Patientenlagerfläche
- 176l, 176r: Unterschenkelsegmente
- 178: Oberschenkelsegment
- 180: unteres Rückensegment
- 182: oberes Rückensegment
- 184: Kopfsegment
- 202, 204, 206, 208: Piktogramme
- 210: Tasteneinheit
- 210u, 210d: Bedientasten
- 212: Tasteneinheit
- 212u, 212d: Bedientasten
- 214: Tasteneinheit
- 214u, 214d: Bedientasten
- 216: Tasteneinheit
- 216u, 216d: Bedientasten
- 220: Tasteneinheit
- 220u, 220d: Bedientasten
- 222: Tasteneinheit
- 222u, 222d: Bedientasten
- 224: Tasteneinheit
- 224u, 224d: Bedientasten
- 226: Tasteneinheit
- 226u, 226d: Bedientasten

## Patentansprüche

1. Fernbedienungsvorrichtung (12, 50, 160) zum Steuern mindestens eines medizinischen Gerätes (14, 52, 100, 130, 170) mit mehreren betätigbaren Gerätekomponenten (54, 58, 60, 62, 106, 108, 132, 136 bis 140, 152, 172, 176 bis 184), umfassend:
mehrere jeweils mindestens eine physische Bedientaste (28, 30, 68u, 68d, 70u, 70d, 72u, 72d, 74u, 74d, 74l, 74r) umfassende Tasteneinheiten (22, 24, 26, 68, 70, 72, 74) zum Betätigen der Gerätekomponenten (54, 58, 60, 62, 106, 108, 132, 136 bis 140, 152, 172, 176 bis 184),
wobei die Tasteneinheiten (22, 24, 26, 68, 70, 72, 74) zur visuellen Unterscheidung voneinander jeweils mit einem individuellen, visuell erfassbaren Unterscheidungsmerkmal versehen sind,
eine Anzeigeeinheit (18, 82) zum Darstellen von Piktogrammen (84, 86, 88, 90, 112, 116, 118, 146, 148, 152, 190 bis 200), welche die durch die Tasteneinheiten (22, 24, 26, 68, 70, 72, 74) betätigbaren Gerätekomponenten (54, 58, 60, 62, 106, 108, 132, 136 bis 140, 152, 172, 176 bis 184) repräsentieren,
eine Bereitstellungseinheit (20, 162, 164, 166) zum Erhalten einer Zuordnungsinformation, die eine eindeutige Zuordnung zwischen den Tasteneinheiten (22, 24, 26, 68, 70, 72, 74) und den durch die Tasteneinheiten (22, 24, 26, 68, 70, 72, 74) betätigbaren Gerätekomponenten (54, 58, 60, 62, 106, 108, 132, 136 bis 140, 152, 172, 176 bis 184) definiert, und
eine Steuereinheit (16) zum Zuordnen der Tasteneinheiten (22, 24, 26, 68, 70, 72, 74) zu den Gerätekomponenten (54, 58, 60, 62, 106, 108, 132, 136 bis 140, 152, 172, 176 bis 184) entsprechend der empfangenen Zuordnungsinformation,
**dadurch gekennzeichnet, dass** die Steuereinheit (16) die Anzeigeeinheit (18, 82) derart steuert, dass die von der Anzeigeeinheit (18, 82) dargestellten Piktogramme (84, 86, 88, 90, 112, 116, 118, 146, 148, 152, 190 bis 200) mit den visuell erfassbaren Unterscheidungsmerkmalen derjenigen Tasteneinheiten (22, 24, 26, 68, 70, 72, 74) versehen sind, die den jeweiligen Gerätekomponenten (54, 58, 60, 62, 106, 108, 132, 136 bis 140, 152, 172, 176 bis 184) an Hand der Zuordnungsinformation zugeordnet sind.

2. Fernbedienungsvorrichtung (12, 50, 160) nach Anspruch 1, **dadurch gekennzeichnet, dass** die visuell erfassbaren Unterscheidungsmerkmale unterschiedliche Farben sind.

3. Fernbedienungsvorrichtung (12, 50, 160) nach Anspruch 1 oder 2, **gekennzeichnet durch** ein mit der Steuereinheit (16) verbundenes Kommunikationsmodul (20), das ausgebildet ist, mit Betätigen der jeweiligen physischen Bedientaste (28, 30, 68u, 68d, 70u, 70d, 72u, 72d, 74u, 74d, 74l, 74r) einen Steuerbefehl zum Betätigen der zugeordneten Gerätekomponente (54, 58, 60, 62, 106, 108, 132, 136 bis 140, 152, 172, 176 bis 184) an das medizinische Gerät (14, 52, 100, 130, 170) zu senden.

4. Fernbedienungsvorrichtung (12, 50, 160) nach Anspruch 3, **dadurch gekennzeichnet, dass** das Kommunikationsmodul (20) ausgebildet ist, drahtlos mit dem medizinischen Gerät (14, 52, 100, 130, 170) zu kommunizieren.

5. Fernbedienungsvorrichtung (12, 50, 160) nach einem der vorhergehenden Ansprüche, **dadurch gekennzeichnet, dass** die Bereitstellungseinheit (20, 162, 164, 166) ausgebildet ist, die Zuordnungsinformation von dem medizinischen Gerät (14, 52, 100, 130, 170) zu empfangen.

6. Fernbedienungsvorrichtung (160) nach einem der vorhergehenden Ansprüche, **dadurch gekennzeichnet, dass** die Bereitstellungseinheit mindestens eine Eingabetaste (162, 164, 166) zum Eingeben der Zuordnungsinformation umfasst.

7. Fernbedienungsvorrichtung (160) nach Anspruch 6, **dadurch gekennzeichnet, dass** die Eingabetaste eine Auswahltaste (162, 164, 166) ist, mit der aus einer Untergruppe der auf der Anzeigeeinheit (18, 82) dargestellten Piktogramme (190 bis 200) dasjenige Piktogramm auswählbar ist, dem das jeweilige Unterscheidungsmerkmal zuzuordnen ist.

8. Fernbedienungsvorrichtung (160) nach Anspruch 6 oder 7, **dadurch gekennzeichnet, dass** die Auswahltaste (162, 164, 166) eine Schaltfläche ist, die auf einem die Anzeigeeinheit bildenden berührungssensitiven Bildschirm (82) angeordnet ist.

9. Fernbedienungsvorrichtung (12, 50, 160) nach einem der vorhergehenden Ansprüche, **dadurch gekennzeichnet, dass** die jeweilige Tasteneinheit (22, 24, 26, 68, 70, 72, 74) Mittel zum Anzeigen von Tastenfunktionen aufweist, wobei diese Mittel unabhängig von dem jeweiligen visuell erfassbaren Unterscheidungsmerkmal sind.

10. Fernbedienungsvorrichtung (12, 50, 160) nach einem der vorhergehenden Ansprüche, **dadurch gekennzeichnet, dass** die Piktogramme (84, 86, 88, 90, 112, 116, 118, 146, 148, 152, 190 bis 200) auf der Anzeigeeinheit (18, 82) derart dargestellt sind, dass sie auf die zugehörigen Tasteneinheiten (22, 24, 26, 68, 70, 72, 74) ausgerichtet sind.

11. Fernbedienungsvorrichtung (12, 50, 160) nach einem der vorhergehenden Ansprüche, **dadurch gekennzeichnet, dass** die Steuereinheit (16) die Anzeigeeinheit (18, 82) derart steuert, dass die Anzeigeeinheit (18, 82) nicht betätigbare Gerätekomponenten (64, 104, 110, 142) mit Piktogrammen (92, 114, 120, 154) darstellt, die von den Piktogrammen (84, 86, 88, 90, 112, 116, 118, 146, 148, 152, 190 bis 200), welche die durch die Tasteneinheiten (22, 24, 26, 68, 70, 72, 74) betätigbaren Gerätekomponenten (54, 58, 60, 62, 106, 108, 132, 136 bis 140, 152, 172, 176 bis 184) repräsentieren, unterscheidbar sind.

12. System mit einer Fernbedienungsvorrichtung (12, 50, 160) nach einem der vorhergehenden Ansprüche und mindestens einem durch die Fernbedienungsvorrichtung (12, 50, 160) steuerbaren medizinischen Gerät (14, 52, 100, 130, 170) mit mehreren betätigbaren Gerätekomponenten (54, 58, 60, 62, 106, 108, 132, 136 bis 140, 152, 172, 176 bis 184).

13. System nach Anspruch 12, **dadurch gekennzeichnet, dass** das medizinische Gerät (14, 52, 100, 130, 170) ein Kommunikationsmodul (34) enthält, das ausgebildet ist, die Zuordnungsinformation an die Bereitstellungseinheit (20) der Fernbedienungsvorrichtung (12, 50, 160) zu senden.

14. Verfahren zum Steuern mindestens eines mit mehreren betätigbaren Gerätekomponenten (54, 58, 60, 62, 106, 108, 132, 136 bis 140, 152, 172, 176 bis 184) versehenen medizinischen Gerätes (14, 52, 100, 130, 170) mittels einer Fernbedienungsvorrichtung (12, 50, 160), die eine Anzeigeeinheit (18, 82) und mehrere jeweils mindestens eine physische Bedientaste (28, 30, 68u, 68d, 70u, 70d, 72u, 72d, 74u, 74d, 74l, 74r) umfassende Tasteneinheiten (22, 24, 26, 68, 70, 72, 74) zum Betätigen der Gerätekomponenten (54, 58, 60, 62, 106, 108, 132, 136 bis 140, 152, 172, 176 bis 184) aufweist, wobei die Tasteneinheiten (22, 24, 26, 68, 70, 72, 74) zur visuellen Unterscheidung voneinander jeweils mit einem individuellen, visuell erfassbaren Unterscheidungsmerkmal versehen sind, umfassend folgende Schritte:
Darstellen von Piktogrammen (84, 86, 88, 90, 112, 116, 118, 146, 148, 152, 190 bis 200), welche die durch die Tasteneinheiten (22, 24, 26, 68, 70, 72, 74) betätigbaren Gerätekomponenten (54, 58, 60, 62, 106, 108, 132, 136 bis 140, 152, 172, 176 bis 184) repräsentieren, auf der Anzeigeeinheit (18, 82),
Erhalten einer Zuordnungsinformation, die eine eindeutige Zuordnung zwischen den Tasteneinheiten (22, 24, 26, 68, 70, 72, 74) und den durch die Tasteneinheiten (22, 24, 26, 68, 70, 72, 74) betätigbaren Gerätekomponenten (54, 58, 60, 62, 106, 108, 132, 136 bis 140, 152, 172, 176 bis 184) definiert,
Zuordnen der Tasteneinheiten (22, 24, 26, 68, 70, 72, 74) zu den Gerätekomponenten (54, 58, 60, 62, 106, 108, 136, 152, 176 bis 184) entsprechend der erhaltenen Zuordnungsinformation, und
Steuern der Anzeigeeinheit (18, 82) derart, dass die von der Anzeigeeinheit (18, 82) dargestellten Piktogramme (84, 86, 88, 90, 112, 116, 118, 146, 148, 152, 190 bis 200) die visuell erfassbaren Unterscheidungsmerkmale derjenigen Tasteneinheiten (22, 24, 26, 68, 70, 72, 74) aufweisen, die den jeweiligen Gerätekomponenten (54, 58, 60, 62, 106, 108, 132, 136 bis 140, 152, 172, 176 bis 184) an Hand der Zuordnungsinformation zugeordnet sind.

## Claims

1. Remote control device (12, 50, 160) for control of at least one medical appliance (14, 52, 100, 130, 170) with a plurality of operable device components (54, 58, 60, 62, 106, 108, 132, 136 through 140, 152, 172, 176 through 184), comprising:
a plurality of push-button units (22, 24, 26, 68, 70, 72, 74), each comprising at least one physical operating button (28, 30, 68u, 68d, 70u, 70d, 72u, 72d, 74u, 74d, 741, 74r) for the operation of the device components (54, 58, 60, 62, 106, 108, 132, 136 through 140, 152, 172, 176 through 184),
whereby the push-button units (22, 24, 26, 68, 70, 72, 74) are respectively each provided with an individual, visual detectable differentiation feature for visual differentiation from one another,
a display unit (18, 82) for the representation of pictographs (84, 86, 88, 90, 112, 116, 118, 146, 148, 152, 190 through 200), which represents the device components (54, 58, 60, 62, 106, 108, 132, 136 through 140, 152, 172, 176 through 184) which are operable through the push-button units (22, 24, 26, 68, 70, 72, 74),
a supply unit (20, 162, 164, 166) for the receipt of assignment information which defines an unambiguous assignment between the push-button units (22, 24, 26, 68, 70, 72, 74) and the device components (54, 58, 60, 62, 106, 108, 132, 136 through 140, 152, 172, 176 through 184) which are operable through the push-button units (22, 24, 26, 68, 70, 72, 74), and
a control unit (16) for the assignment of the push-button units (22, 24, 26, 68, 70, 72, 74) to the device components (54, 58, 60, 62, 106, 108, 132, 136 through 140, 152, 172, 176 through 184) corresponding to the assignment information received,
**characterized by** the fact that the control unit (16) controls the display unit (18, 82) in such a manner that the pictographs (84, 86, 88, 90, 112, 116, 118, 146, 148, 152, 190 through 200), which are represented by the display unit (18, 82), are provided with the visual differentiation features of such push-button units (22, 24, 26, 68, 70, 72, 74), to which the respective device components (54, 58, 60, 62, 106, 108, 132, 136 through 140, 152, 172, 176 through 184) are assigned on the basis of the assignment information.

2. Remote control device (12, 50, 160) according to Claim 1, **characterized by** the fact that the visually detectable differentiation features are of differing colors.

3. Remote control device (12, 50, 160) according to Claim 1 or 2, **characterized by** a communications module (20) that is related to the control unit (16) that is designed to send, through the operation of the respective physical push-button units (28, 30, 68u, 68d, 70u, 70d, 72u, 72d, 74u, 74d, 741, 74r), a control order for the operation of the associated device components (54, 58, 60, 62, 106, 108, 132, 136 through 140, 152, 172, 176 through 184) to the medical appliance (14, 52, 100, 130, 170).

4. Remote control device (12, 50, 160) according to Claim 3, **characterized by** the fact that the communication module (20) is designed to communicate wirelessly with the medical appliance (14, 52, 100, 130, 170).

5. Remote control device (12, 50, 160) according to one of the preceding Claims, **characterized by** the fact that the supply unit (20, 162, 164, 166) is designed to receive the assignment information from the medical appliance (14, 52, 100, 130, 170).

6. Remote control device (160) according to one of the preceding Claims, **characterized by** the fact that the supply unit comprises at least one input button (162, 164, 166) for the input of assignment information.

7. Remote control device (160) according to Claim 6, **characterized by** the fact that the input device is a selection button (162, 164, 166), with which the pictograph, which is to be assigned the respective differentiation feature, can be selected from amongst a sub-group of pictographs (190 through 200) that are represented on the display unit (18, 82).

8. Remote control device (160) according to Claim 6 or 7, **characterized by** the fact that the selection button (162, 164, 166) is a switch area which is arranged on a touch screen display (82) which forms the display unit.

9. Remote control device (12, 50, 160) according to one of the preceding Claims, **characterized by** the fact that the respective push-button unit (22, 24, 26, 68, 70, 72, 74) exhibits a means for the display of button functions, whereby the means is independent of the respective visually detectable differentiation feature.

10. Remote control device (12, 50, 160) according to one of the preceding Claims, **characterized by** the fact that the pictographs (84, 86, 88, 90, 112, 116, 118, 146, 148, 152, 190 through 200) are represented in such a manner on the display unit (18, 82) that they are oriented to the corresponding push-button units (22, 24, 26, 68, 70, 72, 74).

11. Remote control device (12, 50, 160) according to one of the preceding Claims, **characterized by** the fact that the control unit (16) controls the display unit (18, 82) in such a manner that the display unit (18, 82) depicts the non-operable device components (64, 104, 110, 142) with pictographs (92, 114, 120, 154) which can be differentiated from the pictographs (84, 86, 88, 90, 112, 116, 118, 146, 148, 152, 190 through 200) which represent the device components (54, 58, 60, 62, 106, 108, 132, 136 through 140, 152, 172, 176 through 184) which are operable through the push-button units (22, 24, 26, 68, 70, 72, 74).

12. System with a remote control device (12, 50, 160) according to one of the preceding Claims and at least one medical appliance (14, 52, 100, 130, 170), with a plurality of device components (54, 58, 60, 62, 106, 108, 132, 136 through 140, 152, 172, 176 through 184) that is controllable through the remote control device (12, 50, 160).

13. System according to Claim 12, **characterized by** the fact that the medical appliance (14, 52, 100, 130, 170) contains a communication module (34) that is designed to send the assignment information to the supply unit (20) of the remote control device (12, 50, 160).

14. Method for control of at least one medical appliance (14, 52, 100, 130, 170) that is supplied with a plurality of operable device components (54, 58, 60, 62, 106, 108, 132, 136 through 140, 152, 172, 176 through 184) by means of a remote control device (12, 50, 160), which exhibits one display unit (18, 82) and a plurality of push-button units (22, 24, 26, 68, 70, 72, 74) that respectively comprise at least one physical operating button (28, 30, 68u, 68d, 70u, 70d, 72u, 72d, 74u, 74d, 741, 74r) for the operation of the device components (54, 58, 60, 62, 106, 108, 132, 136 through 140, 152, 172, 176 through 184), whereby the push-button units (22, 24, 26, 68, 70, 72, 74) are respectively provided with an individual visually detectable differentiation feature for visual differentiation from one another, comprising the following steps:
representation of pictographs (84, 86, 88, 90, 112, 116, 118, 146, 148, 152, 190 through 200) which represent the device components (54, 58, 60, 62, 106, 108, 132, 136 through 140, 152, 172, 176 through 184), which are operable by means of the push-button units (22, 24, 26, 68, 70, 72, 74), on the display unit (18, 82),
receipt of assignment information, which defines an unequivocal assignment amongst the push-button units (22, 24, 26, 68, 70, 72, 74) and the device components (54, 58, 60, 62, 106, 108, 132, 136 through 140, 152, 172, 176 through 184), which are operable by means of the push-button units (22, 24, 26, 68, 70, 72, 74),
assignment of the push-button units (22, 24, 26, 68, 70, 72, 74) to the device components (54, 58, 60, 62, 106, 108, 136, 152, 176 through 184) pursuant to the assignment information received, and
control of the display unit (18, 82) in such a manner that the pictographs (84, 86, 88, 90, 112, 116, 118, 146, 148, 152, 190 through 200) represented by the display unit (18, 82) exhibit the visually detectable differentiation features of their push-button units (22, 24, 26, 68, 70, 72, 74), that are assigned to the respective device components (54, 58, 60, 62, 106, 108, 132, 136 through 140, 152, 172, 176 through 184) on the basis of the assignment information.

## Revendications

1. Dispositif de télécommande (12, 50, 160) pour commander au moins un appareil médical (14, 52, 100, 130, 170) avec plusieurs composants d'appareil actionnables (54, 58, 60, 62, 106, 108, 132, 136 à 140, 152, 172, 176 à 184), comprenant :
plusieurs unités de touche (22, 24, 26, 68, 70, 72, 74) comprenant respectivement au moins une touche de commande physique (28, 30, 68u, 68d, 70u, 70d, 72u, 72d, 74u, 74d, 74l, 74r) pour l'actionnement des composants d'appareil (54, 58, 60, 62, 106, 108, 132, 136 à 140, 152, 172, 176 à 184),
dans lequel les unités de touche (22, 24, 26, 68, 70, 72, 74) sont dotées respectivement d'un trait distinctif visuellement perceptible pour une distinction visuelle les unes des autres,
une unité d'affichage (18, 82) pour présenter des pictogrammes (84, 86, 88, 90, 112, 116, 118, 146, 148, 152, 190 à 200) qui sont représentés par des composants d'appareil (54, 58, 60, 62, 106, 108, 132, 136 à 140, 152, 172 , 176 à 184) actionnables par les unités de touche (22, 24, 26, 68, 70, 72, 74),
une unité de mise à disposition (20, 162, 164, 166) pour l'obtention d'une information d'affectation qui définit une affectation claire entre les unités de touche (22, 24, 26, 68, 70, 72, 74) et les composants d'appareils (54, 58, 60, 62, 106, 108, 132, 136 à 140, 152, 172, 176 à 184) actionnables par les unités de touche (22, 24, 26, 68, 70, 72, 74), et
une unité de commande (16) pour l'affectation des unités de touche (22, 24, 26, 68, 70, 72, 74) aux composants d'appareil (54, 58, 60, 62, 106, 108, 132, 136 à 140, 152, 172, 176 à 184), correspondant à l'information d'affectation reçue,
**caractérisé en ce que** l'unité de commande (16) commande l'unité d'affichage (18, 82) de telle sorte que les pictogrammes (84, 86, 88, 90, 112, 116, 118, 146, 148, 152, 190 à 200) présentés par l'unité d'affichage (18, 82) soient dotés des traits distinctifs visuellement perceptibles des unités de touche (22, 24, 26, 68, 70, 72, 74) qui sont affectés aux composants d'appareil respectifs (54, 58, 60, 62, 106, 108, 132, 136 à 140, 152, 172, 176 à 184), sur la base de l'information d'affectation.

2. Dispositif de commande à distance (12, 50, 160) selon la revendication 1, **caractérisé en ce que** les traits distinctifs visuellement perceptibles sont des couleurs différentes.

3. Dispositif de commande à distance (12, 50, 160) selon la revendication 1 ou 2, **caractérisé par** un module de communication (20) lié à l'unité de commande (16) qui est conçu pour envoyer, avec l'actionnement de la touche de commande physique respective (28, 30, 68u, 68d, 70u, 70d, 72u, 72d, 74u, 74d, 74l, 74r) un ordre de commande pour l'actionnement des composants d'appareils affectés (54, 58, 60, 62, 106, 108, 132, 136 à 140, 152, 172, 176 à 184) à l'appareil médical (14, 52, 100, 130, 170).

4. Dispositif de commande à distance (12, 50, 160) selon la revendication 3, **caractérisé en ce que** le module de communication (20) est conçu pour communiquer sans fil avec l'appareil médical (14, 52, 100, 130, 170).

5. Dispositif de commande à distance (12, 50, 160) selon l'une des revendications précédentes, **caractérisé en ce que** l'unité de mise à disposition (20, 162, 164, 166) est conçue pour recevoir l'information d'affectation de l'appareil médical (14, 52, 100, 130, 170).

6. Dispositif de commande à distance (160) selon l'une des revendications précédentes, **caractérisé en ce que** l'unité de mise à disposition comprend au moins une touche d'entrée (162, 164, 166) pour l'entrée de l'information d'affectation.

7. Dispositif de commande à distance (160) selon la revendication 6, **caractérisé en ce que** la touche d'entrée est une touche de sélection (162, 164, 166) avec laquelle on peut choisir à partir d'un sous-groupe de pictogrammes (190 à 200) présentés sur l'unité d'affichage (18, 82), le pictogramme auquel est affecté le trait distinctif respectif.

8. Dispositif de commande à distance (160) selon la revendication 6 ou 7, **caractérisé en ce que** la touche de sélection (162, 164, 166) est un bouton qui est disposé sur un écran (82) tactile formant l'unité d'affichage.

9. Dispositif de commande à distance (12, 50, 160) selon l'une des revendications précédentes, **caractérisé en ce que** l'unité de touche respective (22, 24, 26, 68, 70, 72, 74) présente des moyens pour l'affichage des fonctions de touches, dans lequel ces moyens sont indépendants du trait distinctif respectif visuellement perceptible.

10. Dispositif de commande à distance (12, 50, 160) selon l'une des revendications précédentes, **caractérisé en ce que** les pictogrammes (84, 86, 88, 90, 112, 116, 118, 146, 148, 152, 190 à 200) sont présentés sur l'unité d'affichage (18, 82) de telle sorte qu'ils soient orientés vers les unités de touches correspondantes (22, 24, 26, 68, 70, 72, 74).

11. Dispositif de commande à distance (12, 50, 160) selon l'une des revendications précédentes, **caractérisé en ce que** l'unité de commande (16) commande l'unité d'affichage (18, 82) de telle sorte que l'unité d'affichage (18, 82) présente des composants d'appareil (64, 104, 110, 142) non actionnables avec des pictogrammes (92, 114, 120, 154) qui peuvent être distingués des pictogrammes (84, 86, 88, 90, 112, 116, 118, 146, 148, 152, 190 à 200) qui représentent les composants d'appareil (54, 58, 60, 62, 106, 108, 132, 136 à 140, 152, 172, 176 à 184) actionnables par les unités de touche (22, 24, 26, 68, 70, 72, 74).

12. Système avec un dispositif de commande à distance (12, 50, 160) selon l'une des revendications précédentes et au moins un appareil médical (14, 52, 100, 130, 170) pouvant être commandé par le dispositif de commande à distance (12, 50, 160) avec plusieurs composants d'appareil (54, 58, 60, 62, 106, 108, 132, 136 à 140, 152, 172, 176 à 184) actionnables.

13. Système selon la revendication 12, **caractérisé en ce que** l'appareil médical (14, 52, 100, 130, 170) contient un module de communication (34) qui est conçu pour envoyer l'information d'affectation à l'unité de mise à disposition (20) du dispositif de commande à distance (12, 50, 160).

14. Procédé de commande d'au moins un appareil médical (14, 52, 100, 130, 170) doté de plusieurs composants d'appareil actionnables (54, 58, 60, 62, 106, 108, 132, 136 à 140, 152, 172, 176 à 184) au moyen d'un dispositif de commande à distance (12, 50, 160) qui présente une unité d'affichage (18, 82) et plusieurs unités de touche (22, 24, 26, 68, 70, 72, 74) comprenant respectivement au moins une touche de commande physique (28, 30, 68u, 68d, 70u, 70d, 72u, 72d, 74u, 74d, 74l, 74r) pour l'actionnement des composants d'appareil (54, 58, 60, 62, 106, 108, 132, 136 à 140, 152, 172, 176 à 184),
dans lequel les unités de touche (22, 24, 26, 68, 70, 72, 74) sont dotées respectivement d'un trait distinctif visuellement perceptible pour une distinction visuelle les unes des autres, comprenant des étapes suivantes :
présentation de pictogrammes (84, 86, 88, 90, 112, 116, 118, 146, 148, 152, 190 à 200) qui sont représentés par des composants d'appareil (54, 58, 60, 62, 106, 108, 132, 136 à 140, 152, 172, 176 à 184) actionnables par les unités de touche (22, 24, 26, 68, 70, 72, 74), sur l'unité d'affichage (18, 82),
obtention d'une information d'affectation qui définit une affectation claire entre les unités de touche (22, 24, 26, 68, 70, 72, 74) et les composants d'appareils (54, 58, 60, 62, 106, 108, 132, 136 à 140, 152, 172, 176 à 184) actionnables par les unités de touche (22, 24, 26, 68, 70, 72, 74),
affectation des unités de touche (22, 24, 26, 68, 70, 72, 74) aux composants d'appareil (54, 58, 60, 62, 106, 108, 136, 152, 176 à 184), correspondant à l'information d'affectation reçue, et
commande de l'unité d'affichage (18, 82) de telle sorte que les pictogrammes (84, 86, 88, 90, 112, 116, 118, 146, 148, 152, 190 à 200) présentés par l'unité d'affichage (18, 82) soient dotés des traits distinctifs visuellement perceptibles des unités de touche (22, 24, 26, 68, 70, 72, 74) qui sont affectés aux composants d'appareil respectifs (54, 58, 60, 62, 106, 108, 132, 136 à 140, 152, 172, 176 à 184), sur la base de l'information d'affectation.
